(19) Europäisches Patentamt
European Patent Office
Office européen des brevets

(11) **EP 2 081 150 A1**

(12) **EUROPEAN PATENT APPLICATION**

(43) Date of publication:
**22.07.2009 Bulletin 2009/30**

(51) Int Cl.:
***G06T 3/40*** (2006.01)

(21) Application number: **08150423.5**

(22) Date of filing: **18.01.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(71) Applicants:
• **Nederlandse Organisatie voor toegepast-natuurwetenschappelijk onderzoek TNO**
  **2628 VK Delft (NL)**

• **Technische Universiteit Delft**
  **2628 BL Delft (NL)**

(72) Inventors:
• **van Eekeren, Adam Wilhelmus Maria**
  **2593 ZC Den Haag (NL)**
• **Schutte, Klamer**
  **2725 ES Zoetermeer (NL)**

(74) Representative: **Hatzmann, Martin et al**
  **Vereenigde**
  **Johan de Wittlaan 7**
  **2517 JR Den Haag (NL)**

(54) **Method of improving the resolution of a moving object in a digital image sequence**

(57) A method of improving the resolution of a moving object in a digital image sequence comprises the steps of:
• constructing an image background model,
• detecting the moving object,
• fitting a model-based trajectory for object registration, and
• producing a high-resolution object description.

The step of producing a high-resolution object description involves an iterative optimisation of a cost function based upon a polygonal model of an edge of the moving object. The cost function is preferably also based upon a high resolution intensity description. The iterative optimisation of the cost function may involve a polygon description parameter and/or an intensity parameter.

**Fig. 1**

**Description**

## 1. INTRODUCTION

Although the concept of Super-Resolution (SR) already exists for more than 20 years [1], not much attention is given to a specific case: SR reconstruction on moving objects. In [2] this subject has been addressed. The algorithm described there performs simultaneously SR on the foreground (moving objects) and background of a scene. Both fore- and background are processed separately with a pixel-based SR algorithm.

This algorithm works fine if a moving object is relatively large (the number of boundary pixels is small in comparison to the total number of object pixels) and contains enough inner structure. However, if an object is small (the number of boundary pixels is larger than or equal to the number of inner-object pixels) and the object itself contains hardly any internal structure, a standard pixel-based SR approach will fail. On one hand there is not enough gradient information to perform a proper registration of the object and on the other hand a traditional pixel-based SR approach makes an error across the object boundary (assuming a cluttered background). This boundary region consists of so-called 'mixed pixels', which contain partly information from the object and partly from the background.

To tackle the aforementioned problems we propose to perform SR on small moving objects using a simultaneous boundary and intensity description of a moving object. Assuming rigid objects that move (constant speed and acceleration are assumed) along a known trajectory through the real world, a proper registration is done by fitting a model trajectory through the object's center of mass in each frame. The boundary of a moving object is modeled with a polygon description and the object's intensities are estimated on a regular spaced grid. Assuming that the local background is already known, a relation is obtained between the position of the edges of the polygon and the estimated intensities of the mixed pixels. By minimizing the model error between the measured intensities and the estimated intensities in a least-squares sense, which is similar to conventional pixel-based SR algorithms, a sub-pixel accurate boundary- and intensity description of the moving object are obtained.

The paper is organized as follows. In Section 2 the setup of the proposed SR algorithm for small moving objects is described. Section 3 describes the experiment and results of a comparison between the proposed algorithm and a traditional pixel-based SR approach. In the last section conclusions are presented.

## 2. ALGORITHM

Our algorithm can be split into three parts: 1) constructing a background model and detecting the moving object, 2) fitting a model-based trajectory for object registration and 3) obtaining an high-resolution object description, containing a sub-pixel accurate boundary and a high-resolution intensity description, by solving an inverse problem.

### 2.1. Background modeling and moving object detection

The detection of moving objects is based on the assumption that a moving object deviates from a static background. Ideally, a static background is estimated using a robust pixel-based SR algorithm [3, 4]. Such a robust SR algorithm provides a proper background estimate, even in the presence of small moving objects. The obtained high-resolution background model, after shifting and down-sampling with a camera model, can be compared to each frame of the image sequence. After thresholding these difference images, a pixel-based object mask for each frame results.

### 2.2. Registration

The object masks, obtained from the detection part, give an indication of the position of the object in each frame. For performing SR, a precise sub-pixel registration is needed. When sufficient internal structure is present, gradient-based registration can be performed. In the setting of *small* moving objects this is usually not the case and therefore another approach is needed.

Assuming that the contrast between object and background is sufficient, in each frame the Center Of Gravity (COG) of the object is calculated. When the motion model of the moving object is known, such a model is fit in a robust way to the calculated COGs. We assume a linear motion model in the real world, which seems realistic given the setting of small moving objects: the objects are far away from the observer (viewer) and will have a small displacement in the image plane due to the high frame rate of today's image sensors. When enough ($\geq 20$) frames are available, a robust fit to the COGs results in a sufficient precise and accurate sub-pixel registration of the moving object.

### 2.3. High-resolution object description

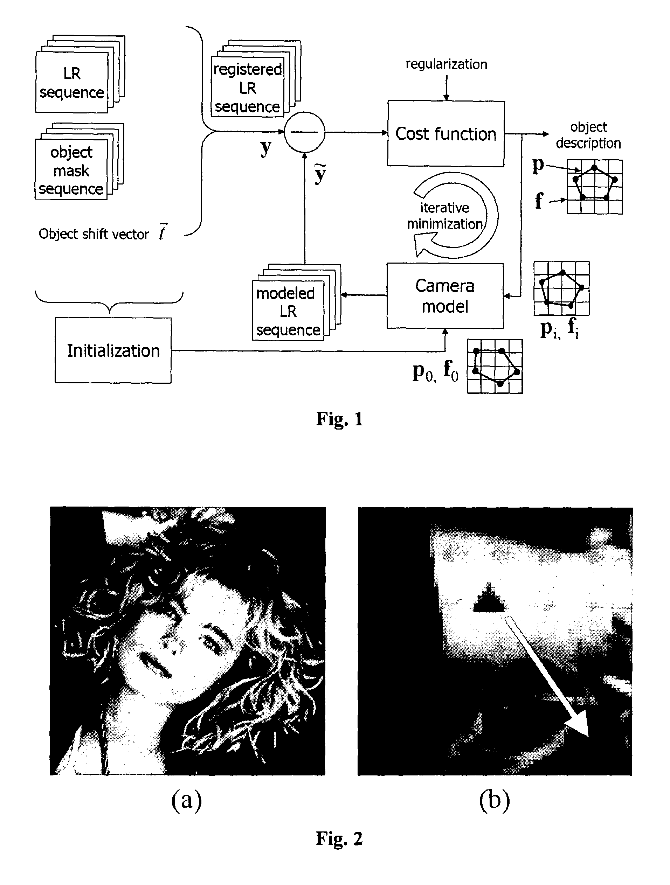

Given that a proper detection (object mask sequence) and registration (object shift vector $\bar{t}$) of a moving object is obtained, a high-resolution description of a moving object can be estimated. A flow diagram ofthis estimation procedure is depicted in Fig. 1 [Flow diagram of estimating the high-resolution description of the moving object].

### 2.3.1. Initialization

The optimization scheme depicted in Fig. 1 must be initialized with a zero-order object description. This is obtained by first applying a pixel-based SR algorithm to the object mask sequence and afterwards applying direct thresholding to this SR result. The boundary pixels of this high-resolution mask are chosen to initialize the vertices of the boundary description. Note that in the experiment not all boundary pixels are chosen as initial vertices, but only four.

Concerning the zero-order object intensity description, a homogeneous intensity profile is assumed. A zero-order intensity description is obtained by taking the mean intensity over all masked object pixels.

### 2.3.2. Camera model

The Camera model maps a high-resolution object description together with the background model to an estimated (modeled) Low-Resolution (LR) image sequence. The estimated intensity of each LR pixel $\tilde{y}_m$ is calculated given a boundary description $\mathbf{p}$ and an object intensity description $\mathbf{f} = [f_1, ..., f_N]^T$ :

$$\hat{y}_m(\mathbf{p}, \mathbf{f}) = \frac{1}{B} \sum_q b_q (1 - A_m(\mathbf{p})) + \frac{1}{F} \sum_s f_s A_m(\mathbf{p}). \quad (1)$$

with $A_m(\mathbf{p})$ the partial area of the support of pixel $m$ that overlaps the foreground given the polygon description $\mathbf{p}$. Hence, the partial area covering the background is $1 - A_m(\mathbf{p})$. The local background intensity at pixel $m$, which is already known from a previous step, is defined by the mean ofthe $B$ high-resolution background samples $b_q$ that are present in the partial background area. The foreground (object) intensity at pixel $m$ is defined by the mean of the $F$ high-resolution foreground samples $f_s$ that are present in the partial foreground area. In this paper a uniform rectangular pixel support is assumed.

### 2.3.3. Cost function

The cost function that is minimized for $\mathbf{p}$ and $\mathbf{f}$ is defined as:

$$\begin{aligned} C_{\mathbf{p},\mathbf{f}} &= \sum_{m=1}^{L} (y_m - \tilde{y}_m(\mathbf{p}, \mathbf{f}))^2 + ... \\ &\lambda \sum_{l=0}^{R} \sum_{k=0}^{R} \alpha^{l+k} \|\mathbf{f} - S_h^l S_v^k \mathbf{f}\|_1 \quad (2) \end{aligned}$$

where the first term represents the summed data misfit contributions for all pixels $m$. Here, $y_m$ are the measured intensities ofthc registered LR 'object' pixels and $\tilde{y}_m$ are the corresponding estimated intensities (eq. 1). The second term regularizes the amount of intensity variation within the object according to the Bilateral Total Variation (BTV) criterium [3]. Here, $S_h^l$ is the shift operator that shifts $\mathbf{f}$ by $l$ pixels in horizontal direction and $S_v^k$ shifts $\mathbf{f}$ by $k$ pixels in vertical direction. The scalar weight, $\alpha$, which is chosen to be 0.6, gives a spatial decaying effect to the summation. The actual minimization of the cost function is done in an iterative way with a Levenberg-Marquardt algorithm.

## 3. EXPERIMENTS

To test the performance of our SR algorithm for small moving objects, it is compared in a quantitative way to the performance of a pixel-based SR algorithm developed by Hardie [5] that performed well in a previous study [6]. The performance is tested on an undersampled simulated image sequence containing a small moving object on a cluttered background.

### 3.1. Data generation

First, data is generated on a high-resolution grid. As a cluttered background the erica-image (Fig. 2a [High-resolution background]), with intensity range [0, 255], is chosen. The small moving object describes a translational motion with respect to this background. A part of a high-resolution image frame containing a moving object is depicted in Fig. 2b [Part of a simulated high-resolution scene containing a moving object (triangle). The arrow indicates the direction of motion of the object].

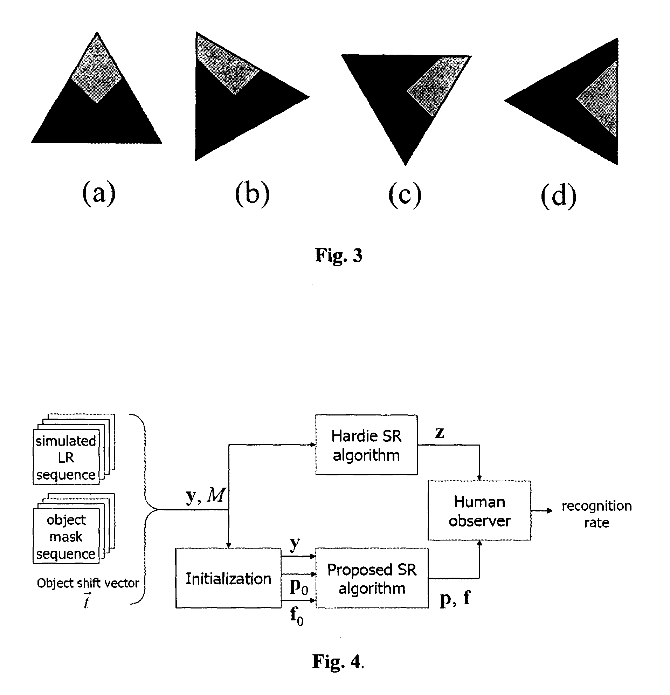

For our experiment, the small moving object must be descriptive in shape and internal structure. Therefore, an equilateral triangle is chosen as small moving object in analogy of Triangle Orientation Discrimination (TOD) [7]. There are four possible triangle orientations: up, right, down and left. Opposite to TOD, an internal structure is added, which consists of a high intensity area within the triangle. There are also four possible locations of this high intensity area: up, right, down and left. A few examples of possible triangle setups are depicted in Fig. 3 [Four different triangle setups. (a) orientation UP, intensity UP. (b) orientation RIGHT, intensity UP. (c) orientation DOWN, intensity RIGHT, (d) orientation LEFT, intensity RIGHT]. In our experiment two different sized triangles are used: one with a side of 1 LR pixel (TR size 1) and one with a side of 2 LR pixels (TR size 2). Also two different amounts of contrast within the triangle are chosen: 50 and 100 intensity values.

After generation of the high-resolution data, a camera model is applied to this data. The camera model consists of a rectangular uniform filter, which models the sensor only, and is followed by a down-sampling of factor 4. The movement ofthe camera with respect to the scene is modeled as a random sub-pixel translation. In our experiment 20 undersampled simulated frames are used. Gaussian distributed noise with $\sigma_n = 5$ is added.

### 3.2. Setup

The setup ofthe experiment is depicted in Fig. 4 [Setup of the comparison experiment]. The moving object in the simulated data is processed by both our proposed SR algorithm and the Hardie SR algorithm. The results are viewed by a human observer, whose goal it is to recognize 1) the orientation ofthe triangle and 2) the part of the triangle with the highest intensity. For both the orientation and the intensity, the observer has four possibilities to choose from: up, right, down and left.

The camera model that is used in both SR algorithms matches the camera model of the simulated data. Furthermore, the motion of the moving object and the camera motion are assumed to be known. The initialization of the proposed SR algorithm for small moving objects is done as described in section 2.3.1. Here, four corner points are selected as initial vertices of the object boundary. The high-resolution grid of intensity description f is twice as dense (in one direction) as that of the LR data. The amount of regularization is chosen to be $\lambda = 0.1$.

The cost function which is optimized in the Hardie algorithm is:

$$C_z = \sum_{m=1}^{L} M_m \left( y_m - \sum_{r=1}^{H} w_{m,r} z_r \right)^2 + \mu \sum_{i=1}^{H} \left( \sum_{j=1}^{H} \beta_{i,j} z_j \right)^2 \tag{3}$$

with $L$ the number of LR pixels, $H$ the number of pixels in high-resolution estimate $\mathbf{z} = [z_l, ..., z_H]^T$ and $M_m$ the mask value at pixel $m$. Note that in the Hardie's original cost function $M=1$ for every LR pixel. The relation between the LR samples and $\mathbf{z}$ is described by $w_{m,r}$ and corresponds with the used camera model for the simulated data. The $\beta_{i,j}$ in the regularization term on the righthand side is chosen such that this term regularizes the amount of gradient energy in $\mathbf{z}$.

The mask sequence is used to consider only the data in the optimization which is supposed to be part ofthe object. The same mask sequence is also used to show a masked Hardie SR result to the human observer. The zoom factor, which is the square root of the ratio between the size of $\mathbf{z}$ and the size of $\mathbf{y}$, is chosen to be 4. Furthermore, the regularization parameter $\mu$ is set to 0.1.

### 3.3. Results

The results are obtained by calculating the recognition rate of the observer. For each setup of triangle size and contrast, there are 16 objects that must be recognized. The precision (standard deviation) of the recognition rate, considering an inverse binomial distribution, for those 16 measurements is approximately 12%. All results are shown in Table 1 and 2.

It is clear that in most cases the proposed SR algorithm for small moving objects performs significantly better. Note that in the case of a triangle with size 1, a good intensity description after applying SR with zoom factor 2 is still difficult. This explains the somewhat low recognition rates in Table 2. We intend to improve these results by increasing the zoom factor and will present them in the final version of this paper.

**Table 1.** Recognition rate of observer regarding the orientation of an equilateral triangle.

| Orientation | proposed method | Hardie method |
|---|---|---|
| TR size 1, contrast 50 | 75 % | 31 % |
| TR size 1, contrast 100 | 38 % | 31 % |
| TR size 2, contrast 50 | 88 % | 31 % |
| TR size 2, contrast 100 | 81 % | 38 % |

## 4. CONCLUSIONS

From the obtained results the following conclusions can be drawn:

**Table 2.** Percentage correct of observer response regarding the position of the intensity difference within an equilateral triangle. The accuracy of the measurements is approximately 10%.

| Intensity | proposed method | Hardie method |
|---|---|---|
| TR size 1, contrast 50 | 31 % | 31% |
| TR size 1, contrast 100 | 38 % | 25 % |
| TR size 2, contrast 50 | 50 % | 38 % |
| TR size 2, contrast 100 | 81 % | 63% |

- The proposed SR algorithm for small moving objects has a significantly higher recognition rate of small moving objects compared to a regular SR approach using masks.
- The main advantage of the proposed SR algorithm is that it can estimate the object boundary with sub-pixel precision and therefore can process the so-called mixed pixels correctly.

## 5. REFERENCES

[1] R.Y. Tsai and T.S. Huang, "Multiframe image restoration and registration," in Advances in Computer Vision and Image Proscessing, vol. 1, pp. 317-339. JAI Press, 1984.
[2] A.W.M. van Eekeren, K. Schutte, J. Dijk, D.J.J. de Lange, and L.J. van Vliet, "Super-resolution on moving objects and background," in Proc. 13th International Conference on Image Processing. IEEE, 2006, vol. I, pp. 2709-2712.
[3] S. Farsiu, M.D. Robinson, M. Elad, and P. Milanfar, "Fast and robust multi-frame super resolution," IEEE Trans. Image Processing, vol. 13, no. 10, pp. 1327-1344, 2004.
[4] T.Q. Pham, L.J. van Vliet, and K. Schutte, "Robust fusion of irregularly sampled data using adaptive normalized convolution," EURASIP Journal on Applied Signal Processing, pp. 1-12, 2006.
[5] R.C. Hardie, K.J. Barnard, J.G. Bognar, E. Armstrong, and E.A. Watson, "High-resolution image reconstruction from a sequence of rotated and translated frames and its application to an infrared imaging system," Optical Engineering, vol. 37, no. 1, pp. 247-260, 1998.
[6] A.W.M. van Eekeren, K. Schutte, O.R. Oudegeest, and L.J. van Vliet, "Performance evaluation of superresolution reconstruction methods on real-world data," Eurasip JASP, Special Issue on Super-Resolution Enhancement of Digital Video, 2007.
[7] P. Bij1 and J.M. Valeton, "Triangle orientation discrimination: the alternative to minimum resolvable temperature difference and minimum resolvable contrast," Optical Engineering, vol. 37, no. 7, pp. 1976-1983, 1998.

## Claims

1.    A method of improving the resolution of a moving object in a digital image sequence, the method comprising the steps of:

- constructing an image background model,
- detecting the moving object,
- fitting a model-based trajectory for object registration, and
- producing a high-resolution object description,

wherein the step of producing a high-resolution object description involves an iterative optimisation of a cost function based upon a polygonal model of an edge of the moving object.

2. The method according to claim 1, wherein the cost function is also based upon a high resolution intensity description.

3. The method according to claim 1 or 2, wherein the high-resolution object description comprises a sub-pixel accurate boundary and/or a high-resolution intensity description.

4. The method according to any of the preceding claims, wherein the step of producing a high-resolution object description involves solving an inverse problem.

5. The method according to any of the preceding claims, wherein the image background is estimated using a pixel-based super-resolution method.

6. The method according to any of the preceding claims, wherein the iterative optimisation of a cost function involves a polygon description parameter (p) and/or an intensity parameter (f).

7. The method according to any of the preceding claims, comprising the further steps of:

- subjecting the high-resolution object description to a camera model to produce a low resolution modelled image sequence,
- producing a difference sequence from a registered image sequence and the modelled image sequence,
- feeding the difference sequence to the cost function, and
- minimising the cost function to produce the next iteration of the polygon description parameter (p) and/or an intensity parameter (f).

8. The method according to any of the preceding claims, wherein the cost function comprises a regularisation term for regulating the amount of intensity variation within the object, preferably according to a bilateral total variation criterion.

9. A computer program product for carrying out the method according to any of claims 1-8.

10. A device for carrying out the method according to any of claims 1-8.

11. The device according to claim 10, comprising:

- an image background unit for constructing an image background model,
- a detection unit for detecting the moving object,
- a fitting unit for fitting a model-based trajectory for object registration, and
- an object description unit for producing a high-resolution object description,

wherein the object description unit is arranged for performing an iterative optimisation of a cost function based upon a polygonal model of an edge of the moving object.

12. A system comprising a device according to claim 10 or 11, which system is a radar system, an infra-red detection system, a medical system such as an NMR system or echoscopy system, an alarm system, a vehicle alert system, or a gaming system.

LR sequence

object mask sequence

Object shift vector $\vec{t}$

registered LR sequence

$\mathbf{y}$

$\widetilde{\mathbf{y}}$

regularization

Cost function

object description

$\mathbf{p}$

$\mathbf{f}$

iterative minimization

Camera model

modeled LR sequence

Initialization

$\mathbf{p}_0, \mathbf{f}_0$

$\mathbf{p}_{i,} \mathbf{f}_i$

Fig. 1

(a)

(b)

Fig. 2

Fig. 3

Fig. 4.

**European Patent Office**

**EUROPEAN SEARCH REPORT**

Application Number

EP 08 15 0423

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 7 149 262 B1 (NAYAR SHREE K [US] ET AL) 12 December 2006 (2006-12-12) <br> * abstract * <br> * column 3, paragraph 8 - paragraph 42 * <br> ----- | 1-12 | INV. <br> G06T3/40 |
| E | EP 1 923 834 A (TNO [NL]) 21 May 2008 (2008-05-21) <br> * abstract * <br> * paragraph [0027] * <br> ----- | 1-12 | |
| A | US 2005/104964 A1 (BOVYRIN ALEXANDR V [RU] ET AL) 19 May 2005 (2005-05-19) <br> * abstract * <br> ----- | 1-12 | |
| A | EP 0 859 513 A (SONY CORP [JP]) 19 August 1998 (1998-08-19) <br> * abstract * <br> ----- | 1-12 | |
| A | CABO J M ET AL: "Adaptive segmentation for gymnastic exercises based on change detection over multiresolution combined differences" <br> IMAGE PROCESSING, 2004. ICIP '04. 2004 INTERNATIONAL CONFERENCE ON SINGAPORE 24-27 OCT. 2004, PISCATAWAY, NJ, USA,IEEE, vol. 1, 24 October 2004 (2004-10-24), pages 337-340, XP010784823 ISBN: 978-0-7803-8554-2 <br> * abstract * <br> ----- | 1-12 | TECHNICAL FIELDS SEARCHED (IPC) <br><br> G06T |

The present search report has been drawn up for all claims

| Place of search | Date of completion of the search | Examiner |
|---|---|---|
| Berlin | 26 June 2008 | González Arias, P |

**ANNEX TO THE EUROPEAN SEARCH REPORT
ON EUROPEAN PATENT APPLICATION NO.**                    EP 08 15 0423

This annex lists the patent family members relating to the patent documents cited in the above-mentioned European search report.
The members are as contained in the European Patent Office EDP file on
The European Patent Office is in no way liable for these particulars which are merely given for the purpose of information.

26-06-2008

| Patent document cited in search report | | Publication date | Patent family member(s) | | Publication date |
|---|---|---|---|---|---|
| US 7149262 | B1 | 12-12-2006 | NONE | | |
| EP 1923834 | A | 21-05-2008 | WO | 2008063058 A1 | 29-05-2008 |
| US 2005104964 | A1 | 19-05-2005 | WO | 03036557 A1 | 01-05-2003 |
| EP 0859513 | A | 19-08-1998 | CA | 2229511 A1 | 14-08-1998 |
| | | | CN | 1199987 A | 25-11-1998 |
| | | | DE | 69831886 D1 | 24-11-2005 |
| | | | DE | 69831886 T2 | 27-07-2006 |
| | | | ES | 2247659 T3 | 01-03-2006 |
| | | | US | 6330344 B1 | 11-12-2001 |

EPO FORM P0459

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Multiframe image restoration and registration. **R.Y. Tsai ; T.S. Huang.** Advances in Computer Vision and Image Proscessing. JAI Press, 1984, vol. 1, 317-339
- Super-resolution on moving objects and background. **A.W.M. van Eekeren ; K. Schutte ; J. Dijk ; D.J.J. de Lange ; L.J. van Vliet.** Proc. 13th International Conference on Image Processing. IEEE, 2006, vol. I, 2709-2712
- **S. Farsiu ; M.D. Robinson ; M. Elad ; P. Milanfar.** Fast and robust multi-frame super resolution. *IEEE Trans. Image Processing,* 2004, vol. 13 (10), 1327-1344
- **T.Q. Pham ; L.J. van Vliet ; K. Schutte.** Robust fusion of irregularly sampled data using adaptive normalized convolution. *EURASIP Journal on Applied Signal Processing,* 2006, 1-12
- **R.C. Hardie ; K.J. Barnard ; J.G. Bognar ; E. Armstrong ; E.A. Watson.** High-resolution image reconstruction from a sequence of rotated and translated frames and its application to an infrared imaging system. *Optical Engineering,* 1998, vol. 37 (1), 247-260
- **A.W.M. van Eekeren ; K. Schutte ; O.R. Oudegeest ; L.J. van Vliet.** Performance evaluation of superresolution reconstruction methods on real-world data. *Eurasip JASP, Special Issue on Super-Resolution Enhancement of Digital Video,* 2007
- **P. Bij1 ; J.M. Valeton.** Triangle orientation discrimination: the alternative to minimum resolvable temperature difference and minimum resolvable contrast. *Optical Engineering,* 1998, vol. 37 (7), 1976-1983